# EUROPEAN PATENT SPECIFICATION

(11) **EP 1 160 122 B1**
(45) Date of publication and mention of the grant of the patent: **19.10.2005**
(21) Application number: 01103807.2
(22) Date of filing: 16.02.2001
(51) Int. Cl.: B60N 2/36

(54) **Coupling device**
Verbindungselement
Element de raccordement

(30) Priority: 30.05.2000 JP 2000159622
(43) Date of publication of application: 05.12.2001
(73) Proprietor: Daihatsu Motor Co., Ltd., Ikeda-shi, Osaka (JP)
(72) Inventor: Nomura, Hidemasa, Ikeda-shi, Osaka (JP); Adachi, Futoshi, Ikeda-shi, Osaka (JP)
(74) Representative: Hoffmeister, Helmut

(56) References cited:
- FR-A- 2 663 888
- JP-A- 6 191 336
- US-A- 3 406 998
- US-A- 4 978 158
- US-A- 5 803 549

## Description

This invention relates to a coupling device having a mounting shaft connected to an attachment or a stationary member for allowing the attachment to be pivotably and detachably attached to the stationary member, (see, for example, US-A-3 406 998, corresponding to the preamble of claim 1).

A rear seat in certain type of motorcars, for example, is turned over or removed from a use position so that a seating space may be made available for a different use, such as for accommodating articles.

A conventional coupling device that serves the above purpose is disclosed in Japanese Patent Laying-Open Publication H6-191336, for example. In this prior construction, an anchor rod connected to a seat base extends into a pocket of a clip attached to a seat cushion through a profile channel member, and a movable bar of the clip is placed between lips of the clip to retain the clip on the anchor rod. In this way, the clip and anchor rod are coupled to be pivotable relative to each other, to pivotably couple the seat cushion to the seat base. By withdrawing the movable bar from between the lips, the clip may be separated from the anchor rod to render the seat cushion detachable from the seat base.

Another type of coupling device is disclosed in Japanese Utility Model Laying-Open Publication H1-108836. In this construction, a pivot pin connected to a backrest extends into a U-shaped groove of a support bracket connected to a floor surface. An insert bracket is inserted between side pieces of the support bracket, with the pivot pin entering a cutout of the insert bracket, to place an insert portion of the insert bracket between the pivot pin and an upper piece of the support bracket. The insert portion retains the pivot pin in the support bracket. Thus, the pivot pin is pivotally connected to the support bracket to pivotally couple the backrest to the floor surface. By withdrawing the insert bracket from the support bracket, the pivot pin may be withdrawn from the support bracket, whereby the backrest becomes detachable from the floor surface.

Of the conventional coupling devices noted above, the former requires the movable bar to be pushed in between the lips while elastically deforming the lips, or to be withdrawn from between the lips, when attaching or detaching the seat. It is thus a strenuous operation to switch the anchor rod and clip between coupling state and uncoupling state, which encumbers attachment and detachment of the seat. For all this, the attached seat tends to become detached relatively easily as a result of the clip and anchor rod easily separating from each other when a force is applied in the direction to detach the seat.

In the latter of the conventional coupling devices noted above, attachment or detachment of the seat requires the insert bracket to be attached or detached by inserting the pivot pin into the cutout of the insert bracket or withdrawing the pivot pin from the cutout. It is a troublesome operation to switch the pivot pin and support bracket between coupling state and uncoupling state, which again encumbers attachment and detachment of the seat.

The object of this invention is to provide a coupling device for pivotably and detachably attaching an attachment such as a seat to a stationary member such as a seat support, in a way that the attachment does not become detached easily, and yet can be attached and detached by a simple operation.

The above object is fulfilled, according to this invention by a coupling device having the features set forth in claim 1.

Further features of the invention are disclosed in the dependent claims.

In the above construction, the movable coupler attached to the fixed coupler is swung about an axis extending in the direction along the axis of the mounting shaft. Then, the inlet-outlet opening of the movable coupler is switched to the release position in phase, circumferentially of the axis, with the inlet-outlet openings of the fixed coupler. Through these inlet-outlet openings, the mounting shaft may be moved relative to the fixed coupler to fit into the cutouts of the fixed coupler. The movable coupler is swung about the same axis to switch to the coupling position, in which the inlet-outlet opening of movable coupler is placed out of phase, circumferentially of the axis, with the inlet-outlet openings of the fixed coupler. Then, the mounting shaft is rotatably supported by the fixed coupler and movable coupler, with the movable coupler preventing the mounting shaft from coming off the fixed coupler. In this state, the attachment may be coupled to the stationary member to be pivotable about the axis of the mounting shaft.

In the above coupling state, the movable coupler may be swung about the axis to the release position to place the inlet-outlet opening of the movable coupler in phase, circumferentially of the axis, with the inlet-outlet openings of the fixed coupler. Then, the mounting shaft allows the mounting shaft to be withdrawn from the fixed coupler. In this state, the attachment may be detached from the stationary member by moving the mounting shaft relative to the fixed coupler and out of the cutouts of the fixed coupler.

With this construction, even when an operating force is applied in the direction to move the mounting shaft away from the fixed coupler, such as when vibration is applied to the attachment in the coupled state, this operating force will be contained in the cutout of the movable coupler, and the latter will not switch from the coupling position to the release position. Thus, the movable coupler may be swung between the coupling position and release position lightly with little resistance to its pivotal movement. Even when the operating force noted above acts on the attachment, strong as it may be, the mounting shaft is supported by the fixed coupler and movable coupler reliably against disengagement from the fixed coupler.

As noted above, the movable coupler is switchable between the coupling position and release position with little resistance to the pivotal movement. At the same time, the movable coupler is not easily switchable to the release position when an operating force acts on the attachment in the coupled state in a direction to detach the attachment. Consequently, the attachment is reliably coupled to the stationary member, with the mounting shaft strongly supported by the fixed coupler and movable coupler against disengagement. Such coupling force is strong against the above operating force, despite the small resistance to the pivotal movement. Moreover, the attachment may be attached and detached with ease by switching the movable coupler between the coupling position and release position with a small force.

The movable coupler is pivotally supported by the fixed coupler to be pivotable through the fixed coupler relative to the one of the attachment and the stationary member not having the mounting shaft, to switch between the coupling position and release position. With the fixed coupler assembled to the attachment or the stationary member not having the mounting shaft, the movable coupler also is supported by the attachment or stationary member.

Thus, the attachment is strongly attached to the stationary member, with the fixed coupler and movable coupler assembled to the attachment or stationary member. The attachment is attachable to and detachable from the stationary member in a simple and easy operation quickly and efficiently. This is achieved by assembling the fixed coupler and movable coupler together to the stationary member, for example.

It is preferred that the fixed coupler includes a pair of shaft support portions defining the cutouts and spaced from each other axially of the mounting shaft, and the movable coupler includes a shaft support portion defining the cutout and inserted between the shaft support portions of the fixed coupler, the shaft support portion of the movable coupler being pivotally supported by the shaft support portions of the fixed coupler through engaging projections and recesses formed in directions along the axis of the mounting shaft.

According to the above construction, the movable coupler is rigidly supported, at the opposite sides of the shaft support portion thereof, by the fixed coupler not to become disengaged easily. When an operating force acts on the mounting shaft in a direction to move the mounting shaft away from the fixed coupler, the movable coupler reliably retains the mounting shaft in place.

The fixed coupler rigidly supports the movable coupler which, in turn, effectively prevents the mounting shaft from moving out of the fixed coupler. Consequently, the attachment remains strongly attached to the stationary member.

The fixed coupler and the movable coupler may be formed of a plastic material. Then, the projections and recesses may be formed with high precision so that the projections and recesses may engage each other with high precision even in spite of a small engaging depth. That is, the projections and recesses may engage each other by a small engaging depth. This feature facilitates assembly of the fixed coupler and movable coupler in a predetermined engaging state. The movable coupler is reliably supported by the fixed coupler, with the projections and recesses engaged with high precision.

The attachment is strongly attached to the stationary member, not to be easily detachable, by the movable coupler reliably supported by the fixed coupler. This coupling device may be formed easily and efficiently by assembling the fixed coupler and movable coupler with ease.

In a preferred embodiment of the invention, the pair of shaft support portions of the fixed coupler have (in plan view) one ends thereof connected to each other, and the other ends spaced apart from each other. When assembling the fixed coupler and movable coupler, the shaft support portion of the movable coupler is moved to enter between the separated ends of the shaft support portions of the fixed coupler, while elastically deforming the fixed coupler to spread the shaft support portions apart from each other. In this way, the movable coupler may be assembled to the fixed coupler easily.

Thus, the separated ends of the shaft support portions of the fixed coupler are used in assembling the fixed coupler and movable coupler. Such assembling operation is carried out easily and efficiently by inserting the shaft support portion of the movable coupler between the shaft support portions of the fixed coupler.

In a further embodiment of this invention, the fixed coupler is fixed to the one of the attachment and the stationary member not having the mounting shaft, through a mounting element having supporting devices for contacting outer surfaces of the pair of shaft support portions of the fixed coupler, respectively. As a result, the shaft support portions of the fixed coupler are prevented from moving away from each other by the supporting devices receiving the outer surfaces of the shaft support portions. Consequently, even when a load of retaining the mounting shaft acts on the movable coupler, the shaft support portions of the fixed coupler prevented from moving away from each other hold the movable coupler against disengagement from the fixed coupler.

With the movable coupler prevented from disengaging from the fixed coupler as noted above, the attachment remains reliably attached to the stationary member. The use of the mounting element for preventing spreading of the two shaft support portions of the fixed coupler provides an advantage in terms of construction.

Other features and advantages of this invention will be apparent from the following description of the embodiment to be taken with reference to the drawings. In the drawings:-
Fig. 1 is a side view of a rear seat unit of a motorcar;
Fig. 2 is a plan view of the rear seat unit;
Fig. 3 is a side view of a seat cushion and backrest in a contained position;
Fig. 4 is a side view of the seat cushion and backrest in another contained position;
Fig. 5 is a side view showing a portion of the seat cushion attached to a seat support;
Fig. 6A is a side view of a coupling device in a coupling state;
Fig. 6B is a side view of the coupling device in an uncoupling state;
Fig. 7A is a front view in vertical section of the coupling device in the coupling state;
Fig. 7B is a front view in vertical section of the coupling device in the uncoupling state; and
Fig. 8 is an exploded perspective view of the coupling device.

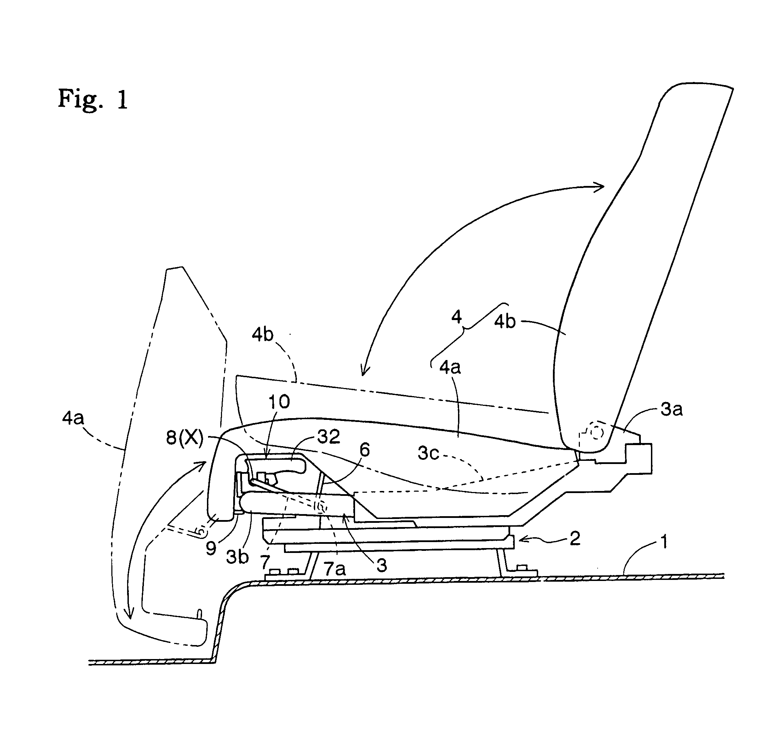

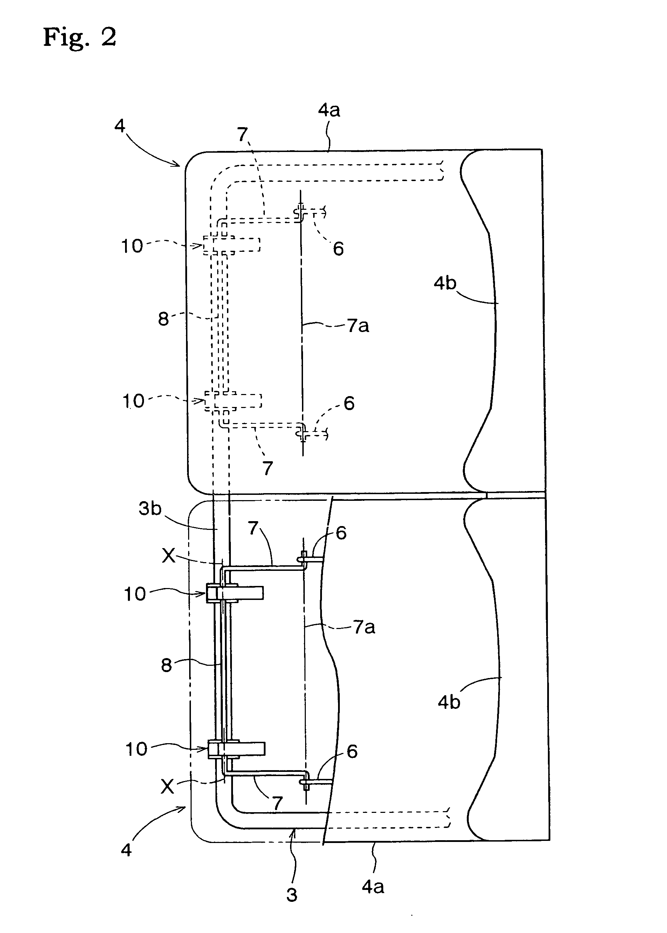

As shown in Figs. 1 and 2, a motorcar has a rear seat unit on a floor surface 1 in a rearward region thereof. The rear seat unit includes a seat support assembly 2 fixed to the floor surface 1. The seat support assembly 2 includes a seat support 3 for supporting, as attached to right and left side portions thereof, seats 4 each having a seat cushion 4a and a backrest 4b.

The backrest 4b of each of the right and left seats 4 is attached at a lower end thereof to a support portion 3a at a rear end of seat support 3, to be pivotable about an axis extending transversely of the car.

The seat cushion 4a of each of the right and left seats 4 has a pair of right and left support arms 6 extending from shape-retaining wire rods 5 in the seat cushion 4a to project under the seat cushion 4a. Each of the right and left support arms 6 is connected to one of a connecting link 7 which is pivotable about an axis 7a. A solid mounting shaft 8 having a circular cross section extends transversely of the seat 4 between the other ends of the two connecting links 7. Thus, the mounting shaft 8 is swingable about the axis 7a relative to the seat cushion 4a through the right and left connecting links 7. The mounting shaft 8, disposed adjacent the forward end of seat cushion 4a, has two coupling devices 10 spaced apart axially of the mounting shaft 8. The coupling devices 10 attach the mounting shaft 8 to a front support portion 3b of seat support 3 formed of round pipe and extending transversely of the car, such that the mounting shaft 8 is rotatable about axis 8a thereof and detachable from the front support portion 3b. It is to be noted that the right and left connecting links 7 and mounting shaft 8 are formed of a single round bar. That is, the single round bar is bent so that, in the above attached position, end portions of the round bar defining the ends of connecting links 7 connected to the support arms 6 to be rotatable about axis 7a, and an intermediate portion of the round bar defining the mounting shaft 8, extend transversely of the seat 4, and that portions of the round bar defining main portions of the connecting links 7, other than the ends connected to the support arms 6, extend longitudinally of the seat 4.

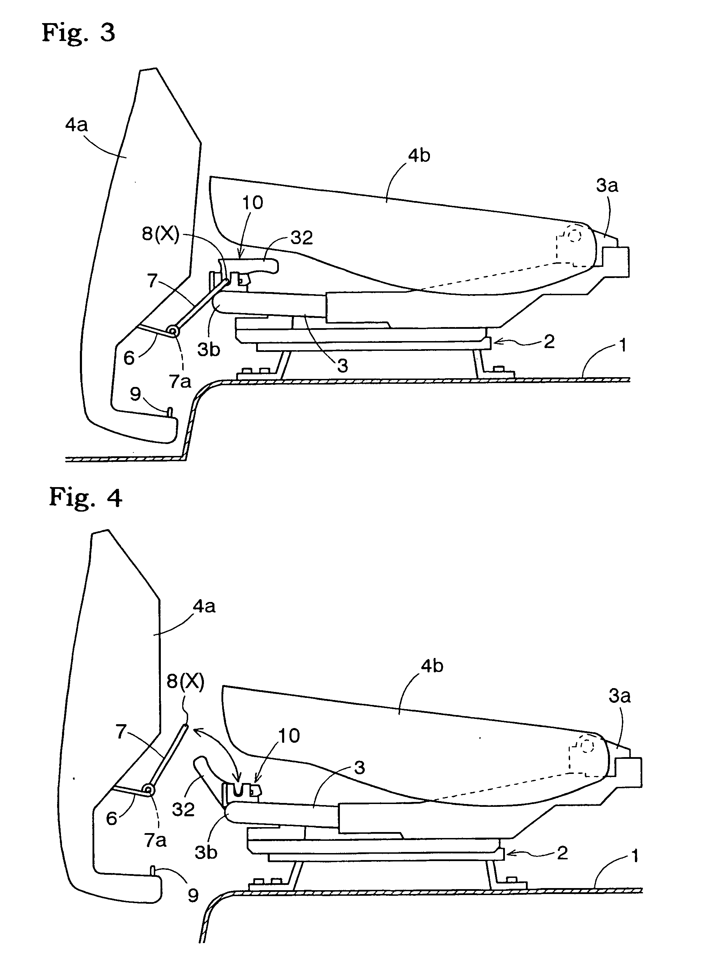

Each of the right and left seats 4 is in a position for seating a passenger, in which, as shown in solid lines in Fig. 1, the backrest 4b is in a use position erected on the seat support 3, and the seat cushion 4a is connected at the forward end thereof to the seat support 3 through the mounting shaft 8 and coupling devices 10, with the rear end of the seat cushion 4a resting on a rearward portion of the seat support 3. From this position, each seat 4 may be switched to a contained position as shown in two-dot chain lines in Fig. 1 and in solid lines in Fig. 3. To effect this switching, the seat cushion 4a is swung about axis 7a relative to the connecting links 7, and forward about the axis of mounting shaft 8 relative to the seat support 3. Thereafter, the seat cushion 4a is left standing on the floor surface forwardly of the seat support assembly 2. Then, the backrest 4b is turned to a position to lie prostrate over the seat support assembly 2. As another contained position, as shown in Fig. 4, the seat cushion 4a may be detached from the seat support 3 and stood on the floor surface forwardly of the seat support assembly 2, with the backrest 4b lying prostrate over the seat support assembly 2. When the seats 4 are contained as described above, a seating space over the seat support assembly 2 is available for a different use, such as for accommodating articles.

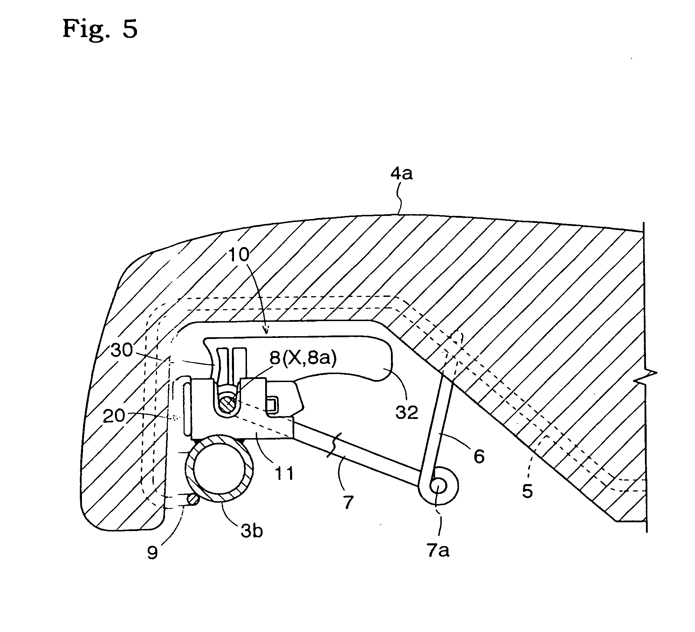

Fig. 5 and other figures show an engaging element 9 disposed at ends of wire rods 5. The engaging element 9 engages a lower position of the front support portion 3b of seat support 3 to avoid lifting and the like of the seat cushions 4a.

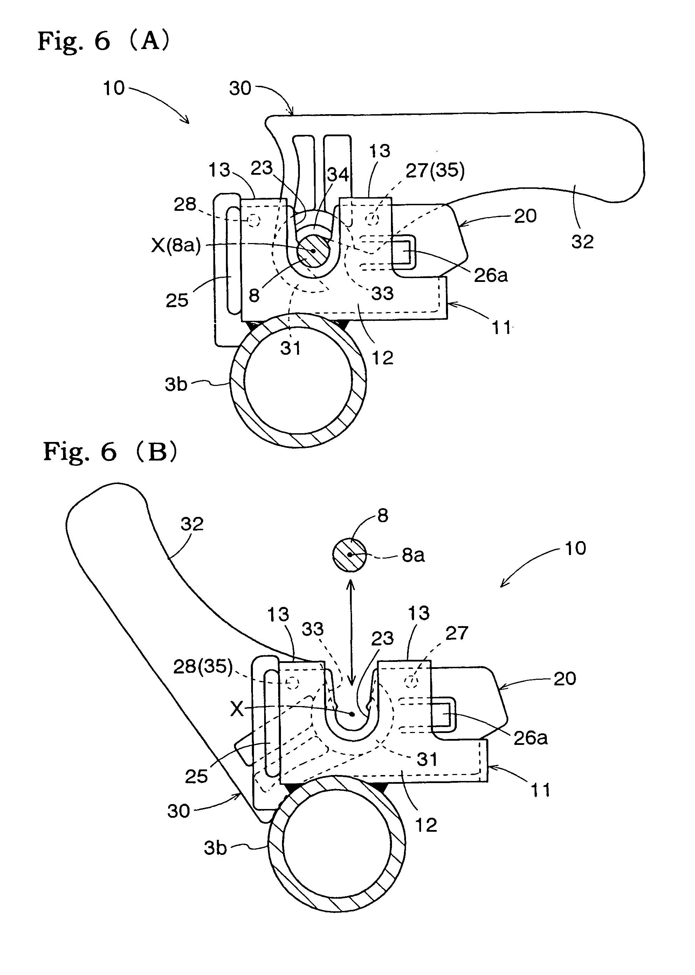

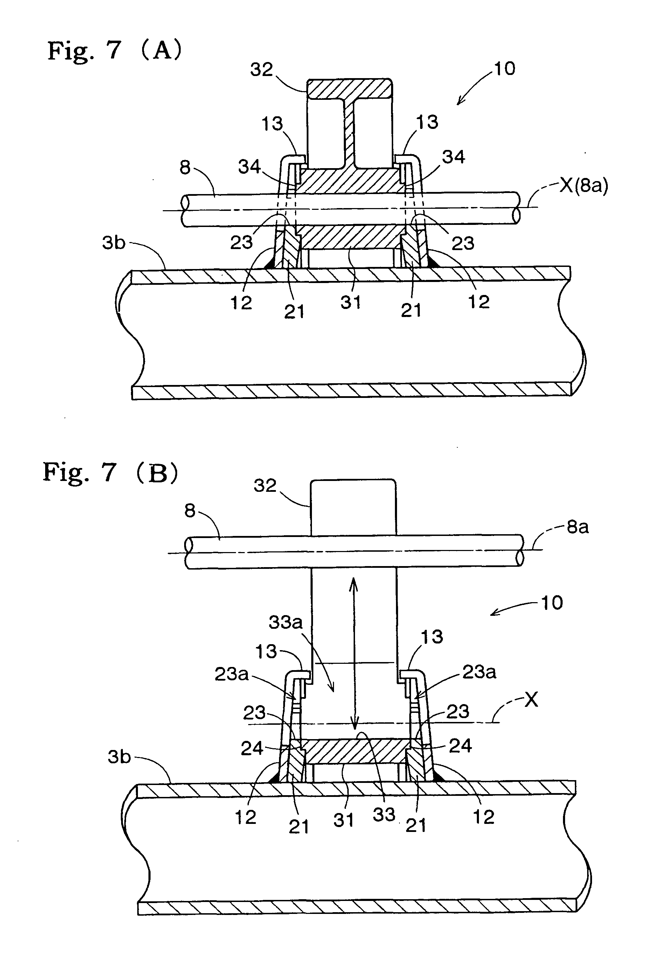

As shown in Figs. 6, 7 and so on, each coupling device 10 has a mounting element 11, a fixed coupler 20 and a movable coupler 30 assembled together as described hereinafter. First, the mounting element 11 which is formed of sheet metal is fixed by welding to the front support portion 3b of seat support 3. The fixed coupler 20 is fixed to the front support portion 3b through the mounting element 11. The movable coupler 30 is pivotally supported, so that a shaft support portion 31 thereof is rotatable about an axis X, by a pair of right and left shaft support portions 21 of the fixed coupler 20. As a result, the movable coupler 30 is pivotably supported by the front support portion 3b through the fixed coupler 20. The movable coupler 30 includes a control lever 32 extending from the shaft support portion 31. The control lever 32 is operable to swing the movable coupler 30 about the axis X which extends along the axis 8a of mounting shaft 8. Thus, each coupling device 10 is switchable between a state of attaching the seat cushion 4a to the front support portion 3b by rotatably supporting the mounting shaft 8, and a state of allowing the seat cushion 4a to be detached from the seat support 3 by releasing the mounting shaft 8. The construction and operation of each coupling device 10 will be described in detail hereinafter.

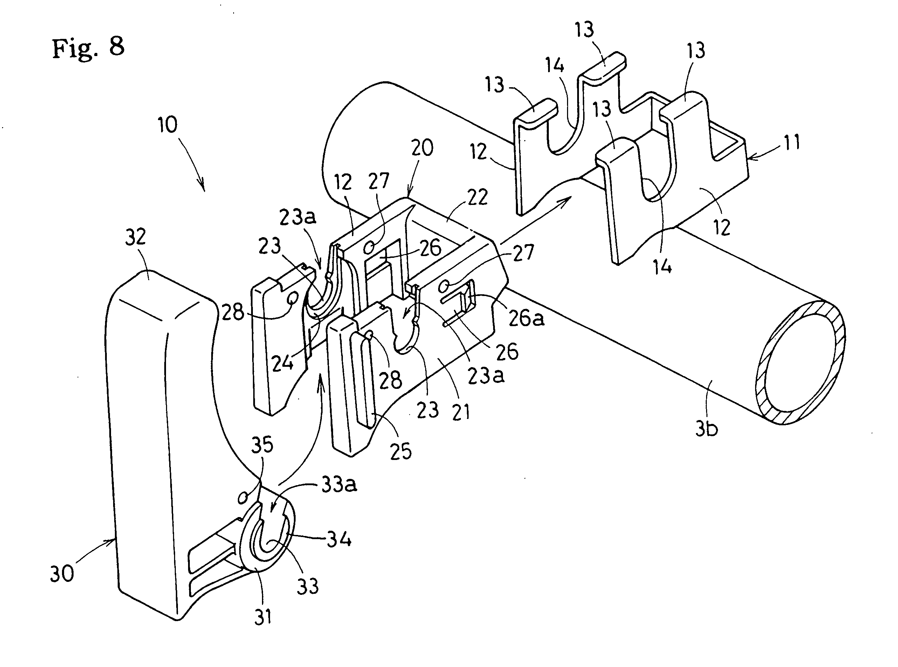

As shown in Figs. 8 and so on, the fixed coupler 20 includes a connecting wall portion 22 formed of a plastic material and integrated with and extending between ends of the right and left shaft support portions 21 formed of the same plastic material. Thus, the fixed coupler 20 is a plastic element approximately U-shaped in plan view, with the right and left shaft support portions 21 having one ends thereof interconnected by the connecting wall portion 22, and the other ends separated from each other with a predetermined spacing therebetween.

Each of the right and left shaft support portions 21 of fixed coupler 20 defines a cutout 23 with an inlet-outlet opening 23a. This cutout 23 is shaped to allow the mounting shaft 8 to be inserted or withdrawn through the inlet-outlet opening 23a in a direction perpendicular to the axis 8a of mounting shaft 8, and to support the inserted mounting shaft 8 for rotation in the bottom of cutout 23.

As shown in Figs. 8 and so on, the movable coupler 30 has the shaft support portion 31 and control lever 32 formed of the plastic material to be integral with each other. The shaft support portion 31 defines a cutout 33 with an inlet-outlet opening 33a. This cutout 33 is shaped to allow the mounting shaft 8 to be inserted or withdrawn through the inlet-outlet opening 33a in a direction perpendicular to the axis 8a of mounting shaft 8.

Each of the right and left shaft support portions 21 of fixed coupler 20 defines a recess 24, which is indented in a direction along the axis X, in an inward surface of the shaft support portion 21 where the cutout 23 is located. The movable coupler 30 defines projections 34, projecting in directions along the axis X, from opposite sides of shaft support portion 31 where the bottom of cutout 33 is located. The projections 34 are formed at the same time when the movable coupler 30 is formed of the plastic material. The two projections 34 and two recesses 24 are used in assembling the movable coupler 30 and fixed coupler 20 as shown in Figs. 6 and 7. That is, the shaft support portion 31 of movable coupler 30 is moved from below the fixed coupler 20 to enter between the shaft support portions 21, while elastically deforming the fixed coupler 20 to spread the shaft support portions 21 apart from each other. As a result, the right and left projections 34 of movable coupler 30 are fitted into the right and left recesses 24 of fixed coupler 20, respectively. With the right and left projections 34 fitted in the right and left recesses 24, the shaft support portions 31 and 21 of movable coupler 30 and fixed coupler 20 are engaged to be rotatable relative to each other about the axis X. Consequently, when the bottoms of cutouts 33 of fixed coupler 20 and the bottom of cutout 23 of movable coupler 30 are aligned coaxially to one another, the movable coupler 30 is supported by the fixed coupler 20 to be pivotable about the axis X. The axis X about which the movable coupler 30 is pivotable relative to the fixed coupler 20 extends along and is substantially the same as the axis 8a of mounting shaft 8 when the mounting shaft 8 is placed in the bottoms of cutouts 23 of fixed coupler 20.

The fixed coupler 20 to which the movable coupler 30 is attached as described above is inserted, with the connecting wall portion 22 forward and the inlet-outlet openings 23a of cutouts 23 directed upward, between right and left side plates 12 of mounting element 11. The fixed coupler 20 has positioning projections 25 formed on outer surfaces of right and left shaft support portions 21, respectively. When the fixed coupler 20 is inserted until the projections 25 contact end surfaces of the side plates 12 of mounting element 11, the fixed coupling device 10 may be fixed in a predetermined assembly state to the front support portion 3b of seat support 3.

The right and left shaft support portions 21 of fixed coupler 20 include retaining hooks 26, respectively. When the right and left positioning projections 25 perform positioning action in contact with the side plates 12 of mounting element 11, forward ends 26a of the retaining hooks 26 engage ends of the side plates 12 of mounting element 11 to perform retaining action. As a result, the fixed coupler 20 is fixed to the mounting element 11 against displacement longitudinally of the car. In this state, the fixed coupler 20 is placed on and supported by the front support portion 3b, between the side plates 12 of mounting element 11. At the same time, the fixed coupler 20 is held in place by a pair of front and rear retaining tongues 13 formed on each of the right and left side plates 12 of mounting element 11 and contacting upper ends of the shaft support portions 21 of fixed coupler 20. Thus, the fixed coupler 20 is fixed to the mounting element 11 against vertical displacement also. Further, in this state, the cutouts 23 of fixed coupler 20 are placed in register with cutouts 14 formed in the side plates 12 of mounting element 11. The mounting shaft 8 may then be moved vertically into and out of the cutouts 23 and 33 of fixed coupler 20 and movable coupler 30. The right and left side plates 12 of mounting element 11 act as supporting devices for contacting and supporting the outer surfaces of the shaft support portions 21 of fixed coupler 20. As a result, the shaft support portions 21 of fixed coupler 20 are prevented from moving away from each other to release the movable coupler 30.

The movable coupler 30 is pivotable about axis X relative to the fixed coupler 20 by swinging the control lever 32 of movable coupler 30. Through this pivotable movement, the movable coupler 30 is switchable between a coupling position, as shown in Fig. 6A, in which positioning projections 35 formed on opposite sides of a proximal portion of control lever 32 are fitted in positioning holes 27 disposed rearwardly of the cutouts 23 of the shaft support portions 21 of fixed coupler 20, and a release position, as shown in Fig. 6B, in which the positioning projections 35 are fitted in positioning holes 28 disposed forwardly of the cutouts 23 of the shaft support portions 21 of fixed coupler 20.

When the movable coupler 30 is switched to the coupling position as shown in Figs. 6A and 7A, the inlet-outlet opening 33a of the cutout 33 of movable coupler 30 is placed out of phase, circumferentially of the axis X, with the inlet-outlet openings 23a of the cutouts 23 of fixed coupler 20. Then, the shaft support portions 21 of fixed coupler 20 and the shaft support portion 31 of movable coupler 30 rotatably support the mounting shaft 8 while retaining the latter in the cutouts 23 and 33. Thus, the coupling device 10 assumes a coupling position in which the fixed coupler 20 and movable coupler 30 rotatably couple the mounting shaft 8 to the front support portion 3b of seat support 3.

When the movable coupler 30 is switched to the release position as shown in Figs. 6B and 7B, the inlet-outlet opening 33a of the cutout 33 of movable coupler 30 is placed in phase, circumferentially of the axis X, with the inlet-outlet openings 23a of the cutouts 23 of fixed coupler 20. Then, the mounting shaft 8 may be inserted, from above, into the cutouts 23 and 33 of fixed coupler 20 and movable coupler 30 or moved upward out of the cutouts 23 and 33. Thus, the coupling device 10 assumes an uncoupling position in which the fixed coupler 20 and movable coupler 30 release or receive the mounting shaft 8.

For attaching each seat cushion 4a to the seat support 3, the movable couplers 30 of right and left coupling devices 10 are first placed in the release position by operating the control levers 32, thereby placing the coupling devices 10 in the uncoupling position. Next, the mounting shaft 8 is lowered toward the shaft support portions 21 and 31 of fixed coupler 20 and movable coupler 30 of each coupling device 10, and inserted into the cutouts 23 and 33 of the shaft support portions 21 and 31. After the mounting shaft 8 is placed in the bottoms of the cutouts 23 of each fixed coupler 20, the control levers 32 may be operated to switch the movable couplers 30 of right and left coupling devices 10 to the coupling position to place the coupling devices 10 in the coupling position. Then, the right and left coupling devices 10 rotatably support the mounting shaft 8 with the fixed couplers 20 fixed to the front support portion 3b of seat support 3, and the movable couplers 30 supported by the fixed couplers 20. The mounting shaft 8 is rotatably attached to the front support portion 3b of seat support 3 by the right and left coupling devices 10. Thus, the seat cushion 4a is now attached to the front support portion 3b of seat support 3 to be pivotable about the axis of mounting shaft 8.

Conversely, for detaching the seat cushion 4a from the seat support 3, the movable couplers 30 of right and left coupling devices 10 are first placed in the release position by operating the control levers 32, thereby placing the coupling devices 10 in the uncoupling position. Next, the mounting shaft 8 may be raised from the shaft support portions 21 and 31 of fixed coupler 20 and movable coupler 30 of each coupling device 10, to withdraw the mounting shaft 8 out of the cutouts 23 and 33 of the shaft support portions 21 and 31. Then, the mounting shaft 8 becomes disengaged from the right and left coupling devices 10 to detach the seat cushion 4a from the seat support 3.

This invention is applicable also where the coupling devices 10 are attached to the seat 4, and the mounting shaft 8 attached to the seat support 3, whereby the seat cushion 4a is pivotably and detachably attached to the seat support 3. Apart from the coupling devices for pivotably and detachably attaching the seat cushion 4a, the invention is applicable also to coupling devices for pivotably and detachably attaching an engine bonnet, a lid of an article storage, and the like. Thus, the seat cushion 4a, engine hood, lid and the like are herein collectively called attachment 4a, and the front support portion 3b of seat support 3 and the like are collectively called stationary member 3b.

### List of Numerals

| | |
|---|---|
| 1 | Floor surface |
| 2 | Seat support assembly |
| 3 | Seat support |
| 3a | Support portion |
| 4 | Seat |
| 4a | Seat cushion |
| 4b | backrest |
| 5 | |
| 6 | |
| 7 | Connecting links |
| 7a | Axis |
| 8 | Mounting shaft |
| 8a | Axis |
| 9 | Engaging element |
| 10 | Coupling device |
| 11 | Mounting element |
| 12 | Side plates |
| 13 | |
| 14 | |
| 15 | |
| 16 | |
| 17 | |
| 18 | |
| 19 | |
| 20 | Fixed coupler |
| 21 | Shaft support portions |
| 22 | Connecting wall portion |
| 23 | Cutout |
| 23a | Inlet-outlet opening |
| 24 | Recess |
| 25 | Positioning projections |
| 26 | Retaining hook |
| 26a | Forward ends |
| 27 | Positioning hole |
| 28 | |
| 29 | |
| 30 | Movable coupler |
| 31 | Shaft support portion |
| 32 | Control lever |
| 33 | Cutout |
| 33a | Inlet-outlet opening |
| 34 | Projections |
| 35 | |
| 36 | |
| 37 | |
| 38 | |
| 39 | |
| 40 | |
| 41 | |
| 42 | |
| 43 | |
| 44 | |
| 45 | |
| 46 | |
| 47 | |
| 48 | |
| 49 | |
| | |
| X | Axis |
| | |
| | |
| | |
| | |
| | |

## Claims

1. A coupling device (20 + 30) comprising a fixed coupler (20) and a movable coupler (30), wherein the fixed coupler (20) and the movable coupler (30) include cutouts (23; 33), respectively for removably receiving a mounting shaft (8) and being switchable between a coupling position and a release position,
in a way, that when said movable coupler is switched to the release position, the inlet-outlet openings (33a) of the cutouts (33) of the movable coupler (30) are placed in phase with the inlet-outlet openings (23a) of the cutouts (23) of the fixed coupler (20) to enable movement of the mounting shaft into and out of the cutouts (23,33); and
when the movable coupler (30) is switched to the coupling position, the inlet-outlet openings (33a) of the cutouts (33) of the movable coupler (30) are placed out of phase with the inlet-outlet openings (23a) of the cutouts (23) of the fixed coupler (20) to prevent removal of the mounting shaft from said cutouts (23, 33)
**characterized in that** the mounting shaft (8) is rotatably supported during the coupling position,
and that said movable coupler (30) is connected to the fixed coupler (20) being (30) pivotable about an axis (X) coinciding with the axis of the mounting shaft (8) received in the cutouts (23;33).

2. A coupling device as defined in claim 1, **characterized in that** the fixed coupler (20) includes a pair of shaft support portions (21) defining the cutouts (23), which are spaced from each other axially of said mounting shaft (8), and said movable coupler (30) includes a shaft support portion (31) defining said cutouts (33) inserted between the shaft support portions (21) of said fixed coupler (20), and that said shaft support portion (31) of the movable coupler (30) being pivotally supported by the shaft support portions (21) of said fixed coupler (20) through engaging projections (34) and recesses formed in directions along the axis of said mounting shaft (8).

3. A coupling device as defined in claim 2, **characterized in that** the fixed coupler (20) and said movable coupler (30) are formed of a plastic material.

4. A coupling device as defined in claim 2 or 3, **characterized in that** the pair of shaft support portions (21) of said fixed coupler (20) have, in plan view, one ends thereof connected to each other, and the other ends spaced apart from each other.

5. A coupling device as defined in any one of claims 1 to 4, **characterized in that** a mounting element (11) to which said fixed coupler is fixed, includes supporting devices for contacting outer surfaces of said pair of shaft support portions of said fixed coupler (30).

## Patentansprüche

1. Kopplungsvorrichtung (20 + 30), umfassend ein festes Kopplungselement (20) und ein bewegliches Kopplungselement (30), bei der das feste Kopplungselement (20) und das bewegliche Kopplungselement (30) Ausschnitte (23;33) jeweils zur Aufnahme einer Haltestange (8) einschließen und zwischen einer Verbindungsposition und einer Löseposition verstellbar sind,
derart, dass dann, wenn das bewegliche Kopplungselement in die Löseposition verstellt ist, die Einlass-Auslass-Öffnungen (33a) der Ausschnitte (33) des beweglichen Kopplungselementes (30) in Koinzidenz mit den Einlass-Auslass-Öffnungen (23a) der Ausschnitte (23) des festen Kopplungselementes (20) angeordnet sind, um eine Bewegung der Haltestange in die Ausschnitte (23; 33) hinein und aus ihnen heraus zu ermöglichen; und
dass dann, wenn das bewegliche Kopplungselement (30) in die Verbindungsposition verstellt ist, die Einlass-Auslass-Öffnungen (33a) der Ausschnitte (33) des beweglichen Kopplungselementes (30) sich nicht in Koinzidenz mit den Einlass-Auslass-Öffnungen (23a) der Ausschnitte (23) des festen Kopplungselementes (20) befinden, um die Entfernung der Haltestange aus den Ausschnitten (23,33) zu verhindern,
**dadurch gekennzeichnet, dass** die Haltestange (8) während der Halteposition rotierend gehalten ist,
und dass das bewegliche Kopplungselement (30) mit dem festen Kopplungselement (20) derart verbunden ist, dass es um eine Achse (X) verschwenkbar ist (30), die mit der Achse der Haltestange (8) koinzidiert, die in den Ausschnitten (23,33) aufgenommen ist.

2. Kopplungsvorrichtung nach Anspruch 1, **dadurch gekennzeichnet, dass** das feste Kopplungselement (20) ein Paar Haltestangen-Lagerteile (21) umfasst, die die Ausschnitte (23) umgrenzen und die voneinander in Achsenrichtung der Haltestange (8) beabstandet sind,
und dass das bewegliche Kopplungselement (30) ein Haltestangen-Lagerteil (31) umfasst, das die Ausschnitte (33) umgrenzt und zwischen die Haltestangen-Lagerteile (21) des festen Kopplungselementes (20) eingesetzt ist,
und dass das Haltestangen-Lagerteil (31) des beweglichen Kopplungselementes (30) durch die Haltestange-Lagerteile (21) des festen Kopplungselementes (20) durch eingreifende Überstände (34) und Rezesse, die in Achsenrichtung der Haltestange (8) ausgeformt sind, schwenkbar gestützt ist.

3. Kopplungsvorrichtung nach Anspruch 2, **dadurch gekennzeichnet, dass** das feste Kopplungselement (20) und das bewegliche Kopplungselement (30) aus einem Kunststoff gebildet sind.

4. Kopplungsvorrichtung nach Anspruch 2 oder 3, **dadurch gekennzeichnet, dass** Paar Haltstangenlager-Teile (21) des festen Kopplungselementes (20) in Draufsicht ein Ende jeweils miteinander verbunden haben, wobei die anderen Enden voneinander beabstandet sind.

5. Kopplungsvorrichtung nach einem der Ansprüche 1 bis 4, **dadurch gekennzeichnet, dass** ein Montageelement (11), an dem das feste Kopplungselement befestigt ist, Stützen umfasst, die die Außenseiten des Paares der Haltestangenlager-Teile des festen Kopplungselementes (30) kontaktieren.

## Revendications

1. Dispositif d'accouplement (20 + 30) comprenant un coupleur fixe (20) et un coupleur mobile (30), dans lequel le coupleur fixe (20) et le coupleur mobile (30) incluent des découpes (23; 33), respectivement, pour recevoir de façon amovible un arbre de montage (8) et peuvent être commutés entre une position d'accouplement et une position de libération,
d'une manière telle que, lorsque ledit coupleur mobile est commuté à la position de libération, les ouvertures d'entrée-sortie (33a) des découpes (33) du coupleur mobile (30) sont placées en phase avec les ouvertures d'entrée-sortie (23a) des découpes (23) du coupleur fixe (20) pour permettre l'entrée de l'arbre de montage dans les découpes (23; 33) et sa sortie; et que,
lorsque le coupleur mobile (30) est commuté à la position d'accouplement, les ouvertures d'entrée-sortie (33a) des découpes (33) du coupleur mobile (30) sont placées de façon déphasée par rapport aux ouvertures d'entrée-sortie (23a) des découpes (23) du coupleur fixe (20) pour empêcher d'enlever l'arbre de montage (8) hors desdites découpes (23, 33)
**caractérisé en ce que** l'arbre de montage (8) est supporté à rotation pendant la position d'accouplement,
et **en ce que** ledit coupleur mobile (30) est connecté au coupleur fixe (20) à pivotement autour d'un axe (X) coïncidant avec l'axe de l'arbre de montage (8) reçu dans les découpes (23; 33).

2. Dispositif d'accouplement selon la revendication 1, **caractérisé en ce que** le coupleur fixe (20) comprend des parties de maintien (21) d'arbre formant une paire et définissant les découpes (23) et sont espacées l'une de l'autre dans une direction axiale dudit arbre de montage (8), et ledit coupleur mobile (30) comprend une partie de maintien (31) d'arbre, définissant lesdites découpes (33) et insérée entre les parties de maintien (21) d'arbre dudit coupleur fixe (20), et **en ce que** ladite partie de maintien (31) d'arbre du coupleur mobile (30) est supportée à pivotement par les parties de maintien (21) d'arbre dudit coupleur fixe (20) par l'effet de saillies de prise (34) et d'évidements formés dans des directions parallèles à l'axe dudit arbre de montage (8).

3. Dispositif d'accouplement selon la revendication 2, **caractérisé en ce que** le coupleur fixe (20) et ledit coupleur mobile (30) sont fabriqués en matière plastique.

4. Dispositif d'accouplement selon la revendication 2 ou 3, **caractérisé en ce que**, en vue en plan, des premières extrémités des parties de maintien (21) d'arbre, formant une paire, dudit coupleur fixe sont connectées l'une à l'autre, et leurs autres extrémités sont espacées l'une de l'autre.

5. Dispositif d'accouplement selon l'une quelconque des revendications précédentes, **caractérisé en ce qu'**un élément de montage (11) auquel ledit coupleur fixe est fixé, inclut des dispositifs de support pour venir en contact avec des surfaces externes des parties de maintien d'arbre formant une paire dudit coupleur fixe (30).
